# EUROPÄISCHE PATENTANMELDUNG

(11) **EP 0 893 278 A2**
(43) Veröffentlichungstag der Anmeldung: **27.01.1999**
(21) Anmeldenummer: 98111824.3
(22) Anmeldetag: 26.06.1998
(51) Int. Cl.: B60B 3/04

(54) **Verfahren zur Herstellung eines Rades für ein Kraftfahrzeug**

(30) Priorität: 25.07.1997 DE 19732076
(71) Anmelder: Dr.Ing.h.c. F. Porsche Aktiengesellschaft, 70435 Stuttgart (DE); KUKA Schweissanlagen & Roboter GmbH, D-86165 Augsburg (DE)
(72) Erfinder: Separautzki, Reinhold, 71696 Möglingen (DE); Stach, Jens, 71296 Heimsheim (DE); Mazac, Karel, Dr., 86316 Friedberg (DE); Weh, Walter, 89343 Jettingen (DE)

(57) **Zusammenfassung**

Ein Verfahren zur Herstellung eines Rades (1) für ein Kraftfahrzeug, bei dem ein Radstern (2) und ein Felgenring (3) durch Reibschweißen miteinander verbunden werden besteht zumindest eines dieser Radteile aus einer Magnesiumlegierung. Die Steuerung der Anreib-, Reib- und Stauchgeschwindigkeit des Reibschweißprozesses, insbesondere der Verformungsfähigkeit, erfolgt in Abhängigkeit von physikalischen Eigenschaften der Magnesiumlegierung.

## Beschreibung

Die Erfindung betrifft ein Verfahren zur Herstellung eines Rades für ein Kraftfahrzeug durch Reibschweißen mit den Merkmalen im Oberbegriff des Hauptanspruchs.

Aus der DE-A-44 35 666 ist ein Fahrzeugrad aus Leichtmetall bekannt, das aus einem Radstern udn einem Felgenring besteht, die durch Reibschweißen miteinander verbunden werden. Der Radstern und/oder der Felgenring können dabei aus einer Magnesiumlegierung bestehen. In der Praxis hat sich gezeigt, daß die Radteile aus einer Magnesiumlegierung nicht ohne weiteres reibgeschweißt werden können. Die sonst für Leichtmetallegierungen, insbesondere für Aluminiumlegierungen geltenden Reibschweißparameter können auf Magnesiumlegierungen nicht übertragen werden, jedenfalls nicht unter Erzielung der gewünschten hohen Festigkeiten und Sicherheiten der Reibschweißverbindung.

Es ist daher Aufgabe der vorliegenden Erfindung, ein geeignetes Herstellungsverfahren zum Reibschweißen von solchen Radteilen aufzuzeigen, von denen zumindest eines aus einer Magnesiumlegierung besteht.

Die Erfindung löst diese Aufgabe mit den Merkmalen im Hauptanspruch 1 und im nebengeordneten Anspruch 9. Mit der Erfindung wird vorgeschlagen, die Steuerung der Anreib-, Reib- und Stauchgeschwindigkeit des Reibschweißprozesses nach den physikalischen Eigenschaften der Magnesiumlegierung zu steuern. Diese Eigenschaften betreffen insbesondere die Verformungsfähigkeit der jeweiligen Magnesiumlegierung, aber auch andere physikalische Eigenschaften, wie Schmelzpunkt, Wärmeleitfähigkeit, spezifische Wärme oder dergleichen. Innerhalb ungleichartiger Werkstoffpaarungen, z.B. zwischen einer Aluminiumlegierung und einer Magnesiumlegierung, bestimmt demnach die Magnesiumlegierung mit ihren Erfordernissen die einzustellenden Reibschweißparameter. Bei gleichartigen Werkstoffpaarungen zwischen zwei verschiedenen Magnesiumlegierungen richten sich die Reibschweißparameter nach den physikalischen Eigenschaften der verformungsärmeren Legierung bzw. nach der Legierung, die den höheren Schmelzpunkt und/oder die höhere Wärmeleitfähigkeit und/oder die höhere spezifische Wärme hat. Mit diesem Verfahren lassen sich die Radteile mit hoher Sicherheit und Verbindungsfestigkeit reibschweißen. Insbesondere werden Risse an den Reibschweißverbindungsnähten, insbesondere der Außennaht, vermieden. Außerdem werden allgemein hohe und am Radumfang gleichmäßige Festigkeitswerte erzielt.

Alternativ oder in Kombination zu den genannten Verfahrensschritten wird die erforderliche Reibschweißgüte auch durch ein Vorwärmen oder zusätzliches Erwärmen eines Radteiles beim Reibschweißprozeß erzielt. Dies ist besonders zum Ausgleich unterschiedlicher Verformungsfähigkeiten der beteiligten Magnesiumlegierung(en) vorteilhaft. Die Erwärmung durch ein aufgeheiztes Schutzgas hat dabei den zusätzlichen günstigen Effekt, daß der Reibschweißbereich abgeschirmt wird und insbesondere Oxidationsprobleme vermieden werden.

In den Unteransprüchen sind vorteilhafte Ausgestaltungen der Erfindung angegeben.

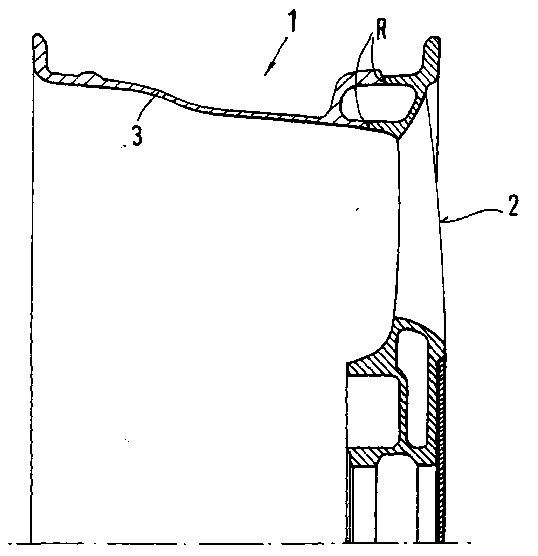

Die Erfindung ist in der Zeichnung beispielsweise und schematisch dargestellt. Die einzige Figur zeigt in einer abgebrochenen Schemadarstellung einen Querschnitt durch ein Fahrzeugrad.

Das gezeigte Rad entspricht in seiner Formgebung dem aus der DE-A-44 35 666 bekannten Rad. Es kann aber auch eine beliebige andere geeignete Gestaltung haben. Das Rad 1 besteht aus einem Radstern 2, der vorzugsweise Hohlspeichen umfaßt, und einem Felgenring 3. Der Radstern 2 kann aus einem Gußteil bestehen und der Felgenring 3 aus einem Gußteil, das mit einem Drückverfahren weiterbehandelt wurde.

Die beiden Radteile 2,3 sind über eine Reibschweißverbindung R miteinander verbunden.

Zumindest eines der beiden Radteile 2, 3 besteht aus einer Magnesiumlegierung. Vorzugsweise besteht zumindest der Felgenring 3 aus einer solchen Magnesiumlegierung. Der Radstern 2 kann aus Korrosionsschutzgründen z.B. aus einer Aluminiumlegierung gefertigt sein. Daneben sind beliebige andere geeignete Werkstoffpaarungen mit der Magnesiumlegierung möglich. Es sind auch Radteile aus gleicher Magnesiumlegierung miteinander zu verbinden. Ferner können auch Radteile aus unterschiedlichen Magnesiumlegierungen verbunden werden.

In einer besonders bevorzugten Ausführungsform bestehen beide Radteile 2, 3 aus einer Magnesiumlegierung, wobei allerdings unterschiedliche Legierungszusammensetzungen zum Einsatz kommen. In der einen bevorzugten Ausführungsform besteht der Felgenring 3 aus einer AM60-Magnesiumlegierung und der Radstern 2 aus einer AE42-Magnesiumlegierung. Mit der anderen bevorzugten Variante wird für den Felgenring 3 ebenfalls eine AM60-Magnesiumlegierung und für den Radstern 2 eine AZ91-Magnesiumlegierung vorgeschlagen. Desweiteren ist es vorteilig, wenn der Radstern 2 aus einer AZ91-Legierung und der Felgenring 3 aus einer AE42-Legierung besteht. Die AZ91-Legierung ermöglicht Feinkornstrukturen und hat eine relativ hohe Druckfestigkeit von 160 N/mm² bei einer geringen Bruchdehnung von 3%. Die AM60-Legierung hat eine größere Bruchdehnung von 8% bei einer geringeren Druckfestigkeit von 130 N/mm². Die AE42-Legierung bietet eine Bruchdehnung von 10% bei einer Druckfestigkeit von 145 N/mm².

Die Radteile 2, 3 werden in einer Reibschweißmaschine (nicht dargestellt) eingespannt und miteinander reibgeschweißt. Die Reibschweißmaschine bietet ein fein einstellbares Drehzahlband und besitzt eine Einrichtung zur Steuerung und gegebenenfalls auch Überwachung des Drehwinkels. Eine solche Reibschweißvorrichtung ist z.B. in der DE-C-195 23 240 angegeben.

Die Steuerung der Anreib-, Reib- und Stauchgeschwindigkeit des Reibschweißprozesses bzw. der Reibschweißmaschine erfolgt in Abhängigkeit von den physikalischen Eigenschaften der Magnesiumlegierung. Bei einer ungleichartigen Werkstoffpaarung zwischen einer Magnesiumlegierung und einem anderen Werkstoff richten sich Parameter nach der Magnesiumlegierung. Bei einer Werkstoffpaarung mit zwei Magnesiumlegierungen ist die Legierung mit der niedrigeren Verformungsfähigkeit maßgebend.

Die ausschlaggebenden physikalischen Eigenschaften sind von unterschiedlicher Natur. Vorrangig richten sich die Parameter nach der Verformungsfähigkeit der ausschlaggebenden Magnesiumlegierung. Maßgeblich ist aber auch ein höherer Schmelzpunkt und/oder eine höhere Wärmeleitfähigkeit und/oder eine höhere spezifische Wärme der bestimmenden Magnesiumlegierung.

Beim Reibschweißprozeß empfiehlt es sich, die Drehzahl beim Anreiben und Reiben in einem Bereich zwischen 500 und 100 U/min einzustellen. Dabei wird beim Anreiben und Reiben der Drehwinkel gesteuert und überwacht. Auch kann das Reibschweißen mit einem chemischen, nicht säurehaltigen Flußmittel erfolgen.

Der Stauchhub richtet sich nach der ausschlaggebenden Magnesiumlegierung. Er wird nach Kraft und Weg derart eingestellt, daß die Bauteilverkürzung in etwa der Wandstärke der Radteile 2, 3 entspricht. In der Praxis haben sich gute Ergebnisse bei einer Bauteilverkürzung von 4 bis 8 mm, vorzugsweise 4 bis 5 mm, gezeigt.

Dabei wird außerdem die Geschwindigkeit des Stauchhubs bei einer ungleichartigen Werkstoffpaarung in Abhängigkeit von der Verformungsfähigkeit der Magnesiumlegierung gesteuert. Bei gleichartigen Werkstoffpaarungen zweier Magnesiumlegierungen richtet sich die Geschwindigkeit des Stauchhubs nach der Verformung derjenigen Magnesiumlegierung, die die geringere Verformungsfähigkeit besitzt. Die Geschwindigkeit des Stauchhubs sollte möglichst gering sein. Sie ist kleiner, als bei anderen Leichtmetallegierungen, z.B. Aluiniumlegierungen, üblich.

Der Stauchhub erfolgt vorzugsweise mit einer konstanten Stauchkraft. Bei einem hydraulischen Stauchantrieb wird dazu die Ölmenge konstant gehalten. Allerdings wird zur Beeinflussung der Stauchgeschwindigkeit der Ölmengendurchfluß gesteuert. Dies geschieht über eine einstellbare Drossel in der Reibschweißmaschine. In der bevorzugten Ausführungsform bleibt die Drosseleinstellung während des Reibschweißprozesses konstant. Sie verändert sich allerdings mit einem Wechsel der Bauteiltypen und/oder der Werkstoffpaarungen und/oder anderer Randbedingungen.

Beim Reibschweißprozeß empfiehlt es sich, eine Gesamtschweißzeit für Anreiben, Reiben und Stauchen zwischen 0,5 und 1,5 sec. einzuhalten.

Als zusätzliche oder alternative Maßnahme zur Beeinflussung der Reibschweißverbindung in Richtung auf eine höhere und gleichmäßigere Festigkeit empfiehlt es sich, eines der Radteile 2, 3 vor dem Reibschweißvorgang vorzuwärmen und/oder beim Reibschweißvorgang zusätzlich zu erwärmen. Bei ungleichartigen Werkstoffpaarungen mit einer Magnesiumlegierung wird das Radteil 2, 3 aus der Magnesiumlegierung erwärmt. Bei Einsatz zweier unterschiedlicher Magnesiumlegierungen wird dasjenige Radteil aus der Magnesiumlegierung mit der geringeren Verformungsfähigkeit und/oder dem höheren Schmelzpunkt und/oder der höheren Wärmeleitfähigkeit und/oder der höheren spezifischen Wärme vorgewärmt und/oder zusätzlich erwärmt. Diese Erwärmung wird auf ca. 40 bis 50°C gesteuert. Ein weiterer Bereich bis 150° ist unter besonderen Umständen auch denkbar.

Das Vorwärmen oder zusätzliche Erwärmen kann auf unterschiedliche geeignete Weise durchgeführt werden. In der bevorzugten Ausführungsform wird ein aufgeheiztes Schutzgas eingesetzt, das auf das zu erwärmende Radteil 2, 3 gerichtet wird. Es empfiehlt sich, die Auftreffstelle des Schutzgasblasstrahles relativ nah an den Radteilrand und an die Reibschweißstelle zu richten. Alternativ kann die Erwärmung statt durch Schutzgas auch durch eine induktive Aufheizung erfolgen. Die induktive Aufheizung wird am feststehenden Teil des Rades vorgenommen, das in einem axial verfahrbaren Schlitten der Reibschweißmaschine gehalten wird.

## Patentansprüche

1. Verfahren zur Herstellung eines Rades für ein Kraftfahrzeug, bei dem ein Radstern und ein Felgenring durch Reibschweißen miteinander verbunden werden und zumindest eines dieser Radteile aus einer Magnesiumlegierung besteht, dadurch gekennzeichnet, daß die Steuerung der Anreib-, Reib- und Stauchgeschwindigkeit des Reibschweißprozesses in Abhängigkeit von physikalischen Eigenschaften der Magnesiumlegierung, insbesondere der Verformungsfähigkeit erfolgt.

2. Verfahren nach Anspruch 1, dadurch gekennzeichnet, daß die Drehzahl beim Anreiben und Reiben zwischen 500 bis 1000 U/min beträgt.

3. Verfahren nach Anspruch 1 oder 2, dadurch gekennzeichnet, daß der Stauchhub nach Kraft und Weg derart eingestellt wird, daß die Bauteilverkürzung etwa der Wandstärke der Radteile (2, 3) entspricht.

4. Verfahren nach Anspruch 3, dadurch gekennzeichnet, daß die Bauteilverkürzung 4 bis 8 mm, vorzugsweise 4 bis 5 mm, beträgt.

5. Verfahren nach einem der Ansprüche 1 bis 4, dadurch gekennzeichnet, daß die Gesamtschweißzeit zwischen 0,5 und 1,5 sec beträgt.

6. Verfahren nach einem der Ansprüche 1 bis 5, dadurch gekennzeichnet, daß beim Anreiben und Reiben der Drehwinkel gesteuert und überwacht wird.

7. Verfahren nach einem der Ansprüche 1 bis 6, dadurch gekennzeichnet, daß bei ungleichartigen Werkstoffpaarungen die Geschwindigkeit des Stauchhubs in Abhängigkeit von der Verformung der Magnesiumlegierung gesteuert wird.

8. Verfahren nach einem der Ansprüche 1 bis 6, dadurch gekennzeichnet, daß bei gleichartigen Werkstoffpaarungen die Geschwindigkeit des Stauchhubs in Abhängigkeit von der Verformung der verformungsärmeren Magnesiumlegierung gesteuert wird.

9. Verfahren zur Herstellung eines Rades für ein Kraftfahrzeug, insbesondere nach Anspruch 1 oder einem der folgenden, dadurch gekennzeichnet, daß mindestens eines der Radteile (2, 3) vor oder beim Reibschweißvorgang vorgewärmt und/oder zusätzlich erwärmt wird.

10. Verfahren nach Anspruch 9, dadurch gekennzeichnet, daß das Radteil (2, 3) aus dem Werkstoff mit dem höheren Schmelzpunkt und/oder der höheren Wärmeleitfähigkeit und/oder der höheren spezifischen Wärme vorgewärmt und/oder zusätzlich erwärmt wird.

11. Verfahren nach Anspruch 9 oder 10, dadurch gekennzeichnet, daß das Radteil (2, 3) um 40 bis 50 °C erwärmt wird.

12. Verfahren nach Anspruch 9, 10 oder 11, dadurch gekennzeichnet, daß das Erwärmen durch ein aufgeheiztes Schutzgas erfolgt.

13. Verfahren nach Anspruch 9, 10 oder 11, dadurch gekennzeichnet, daß das Erwärmen durch induktives Aufheizen erfolgt.

14. Verfahren nach einem der Ansprüche 1 bis 13, dadurch gekennzeichnet, daß die Radteile (2, 3) aus zwei unterschiedlichen Magnesiumlegierungen hergestellt werden.

15. Verfahren nach Anspruch 14, dadurch gekennzeichnet, daß der Radstern (2) aus einer AE42-Magnesiumlegierung und der Felgenring (3) aus einer AM60-Magnesiumlegierung hergestellt wird.

16. Verfahren nach Anspruch 14, dadurch gekennzeichnet, daß der Radstern (2) aus einer AM60-Magnesiumlegierung und der Felgenring (3) aus einer AZ91-Magnesiumlegierung hergestellt wird.

17. Verfahren nach Anspruch 14, dadurch gekennzeichnet, daß der Radstern (2) aus einer AZ91-Magnesiumlegierung und der Felgenring (3) aus einer AE-42-Magnesiumlegierung hergestellt wird.

18. Verfahren nach einem oder mehreren der vorhergehenden Ansprüche, dadurch gekennzeichnet, daß das Schweißen mit einem chemischen, nicht säurehaltigen Flußmittel erfolgt.
